Europäisches Patentamt

European Patent Office

Office européen des brevets

(11) Publication number: **0 172 792**
A2

(12) **EUROPEAN PATENT APPLICATION**

(21) Application number: **85830168.2**

(22) Date of filing: **03.07.85**

(51) Int. Cl.⁴: **B 60 B 7/00**

(30) Priority: **06.07.84 IT 2249384 U**

(43) Date of publication of application:
**26.02.86 Bulletin 86/9**

(84) Designated Contracting States:
**AT BE CH DE FR GB LI NL SE**

(71) Applicant: Bergamaschi, Edoardo
Via Marconi, ang. Via Volta
I-20089 Rozzano (Milano)(IT)

(71) Applicant: Faita, Maurizio
Corso Sempione, 44
I-20155 Milano(IT)

(72) Inventor: Bergamaschi, Edoardo
Via Marconi, ang. Via Volta
I-20089 Rozzano (Milano)(IT)

(72) Inventor: Faita, Maurizio
Corso Sempione, 44
I-20155 Milano(IT)

(74) Representative: Cicogna, Franco
Ufficio Internazionale Brevetti Dott.Prof. Franco Cicogna
Via Visconti di Modrone, 14/A
I-20122 Milano(IT)

(54) A hub cap for a motor vehicle wheel.

(57) A hub cap for wheel rims for motor vehicles in general, which comprises a support element (1, 10) which can be rigidly connected for rotation to the rim (2) of a wheel or the like, which has the peculiarity of including a disc (5, 15) rotatably connected to the support element (1, 10) and associated with a mass (6, 17) disposed eccentrically with respect to the axis of rotation of this disc (5, 15) for retaining the said disc (5, 15) in a stable equilibrium position even when the said wheel rim (2) is in rotation. On its exposed face the disc (5, 15) has representations, writing or the like (7, 18) which are perfectly legible even during rotation of the wheel of the motor vehicle.

*Fig. 3*

EP 0 172 792 A2

- 1 -

"A Hub Cap for a Motor Vehicle Wheel"

The present invention relates to a hub cap for a motor vehicle wheel.

As is known, motor vehicle wheels are generally provided with covering elements over the central part of the wheel, which very often have writing or indications relating to the wheel type, the brand of wheel rim or possibly the wheel rim cover. Usually these are fitted onto the wheel to cover the central part or even the entire wheel(with the exception of the tyre of course) to modify its appearance and improve it from an aesthetic point of view.

As will be appreciated, since known hubcaps are fixedly mounted on the wheel itself, when the vehicle is in movement and the wheels are in rotation such writing is not readable in that it rotates about its own axis with a speed such as to render it practically indistinguishable.

The present invention seeks, therefore, to overcome the above mentioned limitation by providing a hub cap for wheels or wheel rims of motor vehicles in general, which will give the possibility of allowing

- 2 -

the writing, drawings or the like present on the hub of the wheel to be read and identified even during movement of the motor vehicle.

The present invention also seeks to provide a hub cap in which the new functions do not create particular constructional problems or assembly difficulties for the user. The present invention also seeks to provide a hub cap which can be fitted directly to the wheel rim or, possibly to a wheel rim cover, without creating any problems of installation.

Further, the hub cap of the present invention for motor vehicle wheel rims can be made easily starting from elements and materials which are commonly commercially available and, moreover, is economic to produce.

According to the present invention there is provided a hub cap for a motor vehicle wheel rim, comprising a support element which can be rigidly connected for rotation with a wheel rim or the like, characterised by the fact that it includes a disc rotatably connected to the said support element and associated with a mass disposed eccentrically of the axis of rotation of the disc to retain the disc in a stable equilibrium position even when the wheel rim is in rotation, whilst on the exposed face of the said disc there are provided representations, writing or the like.

- 3 -

Embodiments of the present invention will now be more particularly described, by way of example, with reference to the attached drawings, in which:

Figure 1 schematically illustrates the wheel of a motor vehicle on which is fitted a hub cap according to the present invention;

Figure 2 is a sectional view taken on a diametral plane of the hub cap of Figure 1;

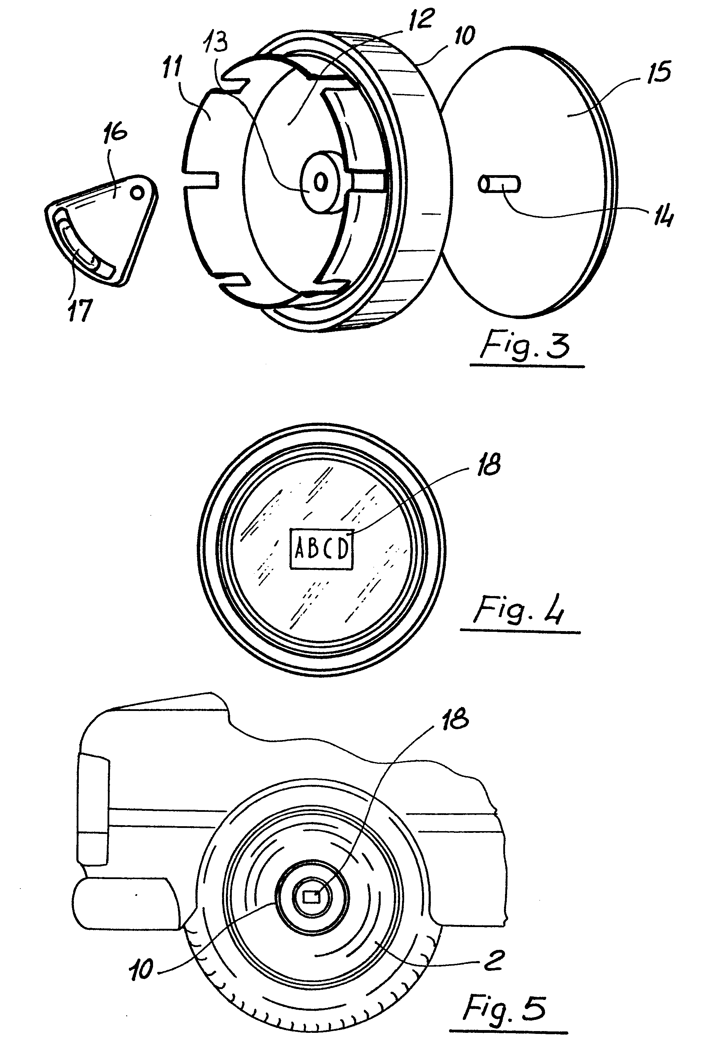

Figure 3 is an exploded perspective view of an alternative embodiment of the invention;

Figure 4 is a front view of the embodiment illustrated in Figure 3; and

Figure 5 is a side view, on a smaller scale, of the embodiment illustrated in Figures 3 and 4, shown fitted to the wheel of a motor vehicle.

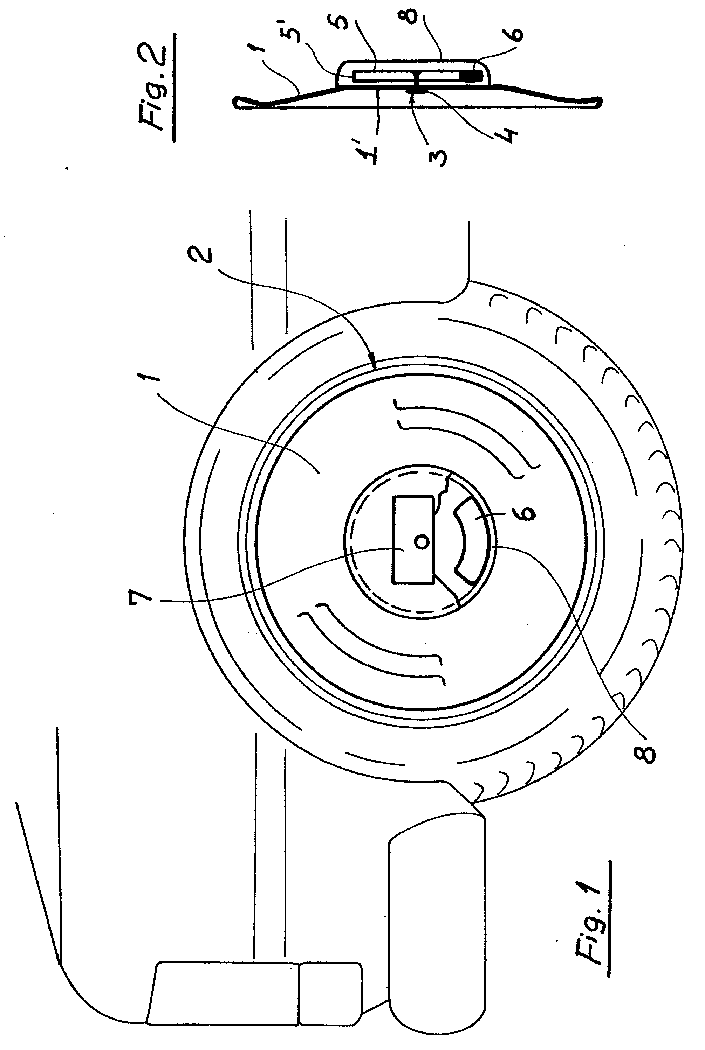

With particular reference first to Figures 1 and 2, the hub cap for motor vehicle wheel rims according to the invention comprises a support element generally indicated with the reference numeral 1, which is constituted by a wheel rim cover which can be fitted, in a manner known per se, to the wheel rim 2 of the wheel of a motor vehicle.

The support element constituted by the wheel rim cover 1 has in its central portion a flat zone, indicated 1', which rotatably supports a pivot pin 3 to which is rigidly connected, on the side of the wheel rim 1 which is facing outwardly when the wheel is fitted to the vehicle, a disc 5 preferably, but not necessarily, formed with a turned rim 5'.

The pivot pin 3 is retained against axial displacement with respect to the part 1' by an elastic washer
4. Rigidly connected to the disc 5 in the zone
delimited between the flat part of the disc 5 and the
turned edge 5', there is fixed a mass 6 which is
disposed eccentrically with respect to the pin 3,
and which is able to create a stable equilibrium
position for the disc 5. On the face of the disc 5
which is in view when the wheel is fitted to the
vehicle, there are provided representations, writing
or the like generally indicated 7, which can be of
any type or nature in dependence on the commercial
and publicity requirements relating to the hub cap
itself.

Advantageously the disc 5 is protected by a casing 8
of transparent material which is rigidly connected
to the support element constituted by a wheel rim
cover 1.

In the alternative embodiment illustrated in Figures
from 3 to 5 the hub cap of the present invention has
a support element which is constituted by an annular
body 10 having a base or end wall 12 with a central
boss 13 in which rotatably engages the rotation pin
14 of a disc 15; projecting axially from the annular
body 10 are a plurality of resilient tongues 11
provided for snap engagement of the body 10 to the
hub of the wheel to which the hub cap is to be fitted.
The disc 15 is advantageously fitted into a rebate
delimited by the exposed face of the annular body 10, that is the face which is exposed when the hub cap is
fitted to the wheel of a vehicle.

Rigidly connected to the pivot pin 14, on the side of
the annular body 10 which is not exposed, there is
provided a sector 16 which is provided with a mass 17
which is disposed eccentrically with respect to the
pivot pin 14 in such a way as to create, for the
disc 5, a stable equilibrium position even during the
rotation of the wheel of the motor vehicle to which
the hub cap is fitted.

On the exposed face the disc 15 has representations,
writing, drawings or the like which can be embossed,
incised or formed in any other way, which are schematically indicated with the reference numeral 18
in the attached drawings.

In both the embodiments described hereinabove, which
are conceptually similar to one another and which
differ only in constructional details, the support
element constituted by the wheel rim cover 1 or by
the annular body 10 is rigidly connected for rotation
with the wheel of the motor vehicle, whilst the disc
5 or the disc 15, being connected to an eccentric
mass 6 or 17, turns to maintain a stable equilibrium
position which is determined in such a way that the
writing, representations, drawings,or the like on
the exposed face of the disc 5 or 15 are always
perfectly readable and such as to allow their easy
reading even when the motor vehicle is in motion,

- 6 -

thus constituting an excellent publicity medium as well as constituting a very pleasing aesthetic factor.

From what has been described above the manner in which the invention achieves the proposed objects will be appreciated. In particular, it is to be noted that with extremely simple and economical means, which are fitted to the hub of the wheel rim of a motor vehicle, the possibility of maintaining the writing or other representations in a fixed position is obtained. In practice the materials used, even if the best results are obtained by using plastics material, as well as the dimensions and shapes of the components can be any of suitable form in dependence on requirements.

0172792

- 7 -

Claims:

1. A hub cap for a motor vehicle wheel rim, comprising a support element (1, 10) which can be rigidly connected for rotation with a wheel rim (2) or the like, characterised by the fact that it includes a disc (5, 15) rotatably connected to the said support element (1, 10) and associated with a mass (6, 17) disposed eccentrically of the axis of rotation of the disc to retain the disc (5, 15) in a stable equilibrium position even when the wheel rim (2) is in rotation, whilst on the exposed face of the said disc (5, 15) there are provided representations, writing or the like (7, 18).

2. A hub cap for a motor vehicle wheel rim, according to Claim 1, characterised by the fact that the support element is constituted by a wheel rim cover (1) and having a central flat zone (1').

3. A hub cap for a motor vehicle wheel rim, according to Claim 2, characterised by the fact that the said disc (5) is provided with an axial pin (3) rotatably supported on the said flat zone (1') of the support element.

4. A hub cap for a motor vehicle wheel rim, according to any preceding Claim, characterised by the fact that the disc (5) has a turned edge (5') which defines, in cooperation with the surface of

- 8 -

The disc (5) itself, the housing region for the eccentric mass (6).

5. A hub cap for a motor vehicle wheel, according to any preceding Claim, characterised by the fact that the disc (5), is housed within a casing (8) made of optically transparent material rigidly connected to the wheel rim cover (1).

6. A hub cap for a motor vehicle wheel rim, according to Claim 1, characterised by the fact that the support element is constituted by an annular body (10) provided with resilient tongues (11) extending axially with respect to the annular body (10), and operable to snap engage into the hub of the motor vehicle wheel, the said annular body (10) having a flat base (12) with a boss (13) for rotatably supporting the pivot pin (14) for the disc (15).

7. A hub cap for a motor vehicle wheel, according to any preceding Claim, characterised by the fact that the annular body (10) has on its exposed face a rebate for receiving the disc (5).

8. A hub cap for a motor vehicle wheel, according to any preceding Claim, characterised by the fact that it includes a sector element (16) fixed to the pivot pin (14) within the annular body (10) the said sectors supporting the eccentric mass.

0172792

1/2

_Fig.2_

_Fig.1_

0172792

Fig.3

Fig.4

Fig.5